# EUROPEAN PATENT APPLICATION

(11) **EP 4 741 689 A1**
(43) Date of publication of application: **13.05.2026**
(21) Application number: 24839571.7
(22) Date of filing: 01.07.2024
(51) Int. Cl.: F16J 15/34, F16C 17/04, F16C 33/24

(54) **SLIDING COMPONENT**

(30) Priority: 07.07.2023 JP 2023111937
(71) Applicant: Eagle Industry Co., Ltd., Minato-ku Tokyo 105-8587 (JP)
(72) Inventor: HOSOI Kazuya, Tokyo 105-8587 (JP); FUKUHARA Takuto, Tokyo 105-8587 (JP); YANO Yuki, Tokyo 105-8587 (JP)
(74) Representative: Seifert, Ruth
(86) International application number: PCT/JP2024/023765
(87) International publication number: WO 2025/013679

(57) **Abstract**

Provided are sliding components capable of maintaining low friction properties. Sliding components includes a pair of sliding rings 10 and 20 having sliding surfaces 11 and 21 which rotate relative to each other to define an outer radial space S1 and an inner radial space S2, the sliding surface 11 is provided with a circumferential groove 14 extending in a circumferential direction and a recess 18 communicating with the circumferential groove 14, and the circumferential groove 14 has a throttled opening portion AA in close vicinity to the sliding surface 11.

## Description

### {TECHNICAL FIELD}

The present invention relates to sliding components, for example, sliding components used in a shaft seal or a bearing.

### {BACKGROUND ART}

As sliding components for preventing leakage of a sealed fluid around a rotating shaft in a rotary machine, for example, a mechanical seal consisting of a pair of annular sliding rings that rotate relative to each other and have sliding surfaces that slide against each other is known. In such mechanical seals, it is desirable to reduce the amount of energy lost due to sliding for environmental measures and the like, and some mechanical seals have a structure aimed at ensuring low friction properties on the sliding surface of the sliding ring.

For example, one is described in Patent Citation 1 as below. The sliding surface of one of the sliding components of the mechanical seal is provided with a plurality of minute concave portions provided at a predetermined pitch width, and a deep groove that is provided across the plurality of concave portions and is deeper than the concave portions. When a pair of sliding components rotate relative to each other, a curved convex portion which is a top portion between concave portions slides against the other sliding surface to generate fine wear products, and the fine wear products adhere between the convex portion and the other sliding surface to form a transfer layer and are also collected in the concave portion. The transfer layer promotes the transition from severe wear to mild wear between the sliding surfaces during relative rotation. Further, the excess wear products are discharged into the deep grooves.

### {CITATION LIST}

### {Patent Literature}

Patent Citation 1: JP 2019-108921 A (Page 5, FIG. 1)

### {SUMMARY OF INVENTION}

### {Technical Problem}

In the sliding components of Patent Citation 1, as the sliding surfaces break in due to sliding, wear products are accumulated and retained in the recesses of the periodic structure, thereby ensuring low friction properties between the sliding surfaces. However, since a radial flow occurs in the fluid between the sliding surfaces due to the pressure difference between the inner radial side and the outer radial side of the sliding components and the centrifugal force acting on the fluid between the sliding surfaces, it is easy for fine wear products to be discharged from the concave portions, and there is a risk that the wear products returning between the sliding surfaces will hinder the maintenance of low friction properties.

The present invention has been made in view of such problems and an object thereof is to provide sliding components capable of maintaining low friction properties.

### {Solution to Problem}

In order to solve the above-described problems, sliding components according to the present invention are sliding components comprising a pair of sliding rings having sliding surfaces which rotate relative to each other to define an outer radial space and an inner radial space of the sliding rings, wherein the sliding surface of one of the sliding rings is provided with a circumferential groove extending in a circumferential direction and a recess communicating with the circumferential groove, and wherein the circumferential groove has a throttled opening portion in close vicinity to the sliding surface of the one of the sliding rings. According to the aforesaid feature of the present invention, the wear products generated by the wear of the sliding components are collected in the circumferential groove, and the movement of the collected wear products is hindered by the throttled opening portion, so that the wear products are less likely to be discharged particularly in the radial direction, and the wear products are retained in the circumferential groove and the recess communicating with the circumferential groove to maintain low friction properties.

It may be preferable that the throttled opening portion is defined by both side walls of the circumferential groove projecting in a radial direction. According to this preferable configuration, the wear products collected in the circumferential groove are less likely to be discharged to both radial sides.

It may be preferable that the circumferential groove has a dovetail shape in which both side walls of the circumferential groove are inclined with respect to an axial direction. According to this preferable configuration, since the throttled opening portion is formed by the inclination, a large volume can be formed on the bottom portion side of the circumferential groove, and the wear products can be efficiently collected.

It may be preferable that the recess is formed to be deeper than the circumferential groove. According to this preferable configuration, the wear products accumulated in the recesses are less likely to be discharged to the outside due to relative sliding of the sliding surfaces.

It may be preferable that the recess has a throttled opening portion on the side of the sliding surface. According to this preferable configuration, the throttled opening portion of the recess and the throttled opening portion of the circumferential groove cooperate to effectively suppress the discharge of the wear products toward the sliding surface.

It may be preferable that the recess is formed at a plurality of positions along the circumferential groove extending in a circumferential direction. According to this preferable configuration, the wear products can be accumulated in the plurality of recesses formed in the circumferential direction, and low friction properties can be maintained uniformly in the circumferential direction of the sliding surface.

It may be preferable that the circumferential groove is formed in a plurality of radial stripes at a predetermined pitch, and a maximum radial width of the recess is equal to or larger than half the predetermined pitch of the circumferential grooves. According to this preferable configuration, regardless of where the circumferential groove and the recess are disposed, the circumferential groove and the recess are in communication with each other, and the wear products are reliably guided from the circumferential groove to the recess.

It may be preferable that the sliding components are formed of SiC. According to this preferable configuration, the wear products of SiC have hydrophilic properties, and the same amorphous nano-interface as the wear products is formed on the sliding surface of SiC of which the wear products are formed, resulting in good wettability. In addition, the wear products are accumulated in the recesses, causing the areas where the recesses are or were previously located to retain fluid and support friction on the sliding surface of the SiC, resulting in the sliding surface with good overall lubricity.

### {BRIEF DESCRIPTION OF DRAWINGS}

FIG. 1 is a vertical cross-sectional view illustrating an example of a mechanical seal as sliding components according to a first embodiment of the present invention.
FIG. 2 is a view in which a sliding surface of a stationary seal ring is viewed from an axial direction in the first embodiment.
FIG. 3 is a cross-sectional view taken along line A-A of FIG. 2.
FIG. 4 is a cross-sectional view taken along line B-B of FIG. 2.
FIG. 5A is a schematic view illustrating a state of one circumferential groove during relative rotation of sliding components as viewed from an axial direction in the first embodiment and FIG. 5B is a cross-sectional view taken along line C-C of FIG. 5A.
FIG. 6A is a schematic view illustrating a state in which the relative rotation of the sliding components has progressed further than in the state illustrated in FIG. 5 as viewed from an axial direction in the first embodiment and FIG. 6B is a cross-sectional view taken along line D-D of FIG. 6A.
FIG. 7 is a schematic view illustrating an example of a state within one circumferential groove when the mechanical seal is normally operated for a long period of time in the first embodiment.
FIG. 8 is a schematic view illustrating an example of a state of a protrusion when the mechanical seal is normally operated for a long period of time in the first embodiment.
FIG. 9 is a view illustrating a circumferential groove and a dimple of sliding components according to a second embodiment of the present invention.
FIG. 10 is a view illustrating a dimple according to Modified Example 2-1 of the second embodiment.
FIG. 11 is a view illustrating a dimple according to Modified Example 2-2 of the second embodiment.
FIG. 12 is a view illustrating a circumferential groove and a dimple of sliding components according to a third embodiment of the present invention.
FIG. 13 is a view illustrating a dimple according to Modified Example 3-1 of the third embodiment.
FIG. 14 is a view illustrating a dimple according to Modified Example 4.

### {DESCRIPTION OF EMBODIMENTS}

Hereinafter, modes for carrying out a sliding component according to the present invention will be described on the basis of embodiments.

### {First embodiment}

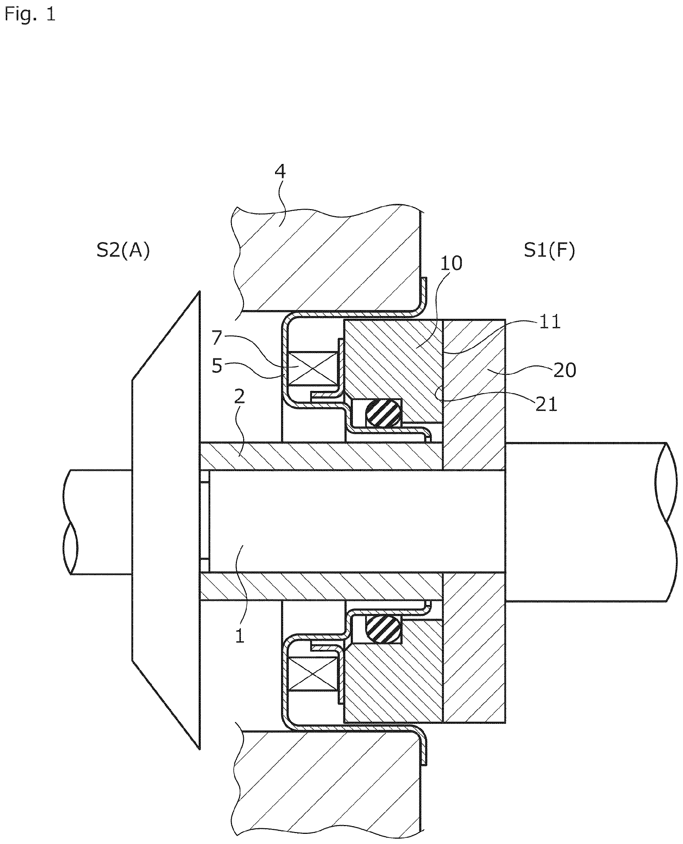

Sliding components according to a first embodiment of the present invention will be described with reference to FIGS. 1 to 8. Furthermore, in this embodiment, a mechanical seal will be described as an example of the sliding component. In the mechanical seal of this embodiment, a sealed fluid F such as oil exists in an outer space S1 as an outer radial space, and air A exists in an inner space S2 as an inner radial space. In this embodiment, a description will be made on the assumption that the outer space S1 is the relatively high-pressure side and the inner space S2 is the low-pressure side. Furthermore, the fluids that exist in the outer space S1 and the inner space S2 are not limited thereto and may be changed as appropriate. Further, for convenience of description, grooves and the like formed on the sliding surface may be indicated by dots in the drawings.

The mechanical seal illustrated in FIG. 1 is used, for example, in a shaft sealing device, and is of an inside type that seals a sealed fluid F that tends to leak from the outer radial side to the inner radial side of the sliding surface.

The mechanical seal mainly includes a stationary seal ring 10 and a rotating seal ring 20. The stationary seal ring 10 has an annular shape and is provided on a seal cover 5, fixed to a housing 4 of a device to which the seal ring is attached, not to be rotatable but axially movable. The rotating seal ring 20 has an annular shape and is provided on a rotary shaft 1 to be rotatable together with the rotary shaft 1 via a sleeve 2. The stationary seal ring 10 is biased in an axial direction by an elastic member 7. A sliding surface 11 of the stationary seal ring 10 and a sliding surface 21 of the rotating seal ring 20 are adapted to slide closely against each other. Furthermore, the sliding surface 21 of the rotating seal ring 20 is flat, and this flat surface does not have any recesses such as grooves.

The stationary seal ring 10 and the rotating seal ring 20 are typically formed of a combination of SiC (hard material) or SiC (hard material) and carbon (soft material), but are not limited thereto and any sliding material that is used as a sliding material for mechanical seals can be used. Furthermore, examples of SiC include sintered bodies using boron, aluminum, carbon, or the like as sintering aids, as well as materials consisting of two or more phases with different ingredients and compositions, such as SiC with dispersed graphite particles, reaction sintered SiC consisting of SiC and Si, SiC-TiC, and SiC-TiN, and examples of carbon include a mixture of carbonaceous and graphite materials, resin-molded carbon, and sintered carbon. Further, in addition to the above sliding materials, metal materials, resin materials, surface modification materials (coating materials), composite materials, and the like can also be used. As described later, from the viewpoint of water retention, a material containing SiC as a main component is preferable.

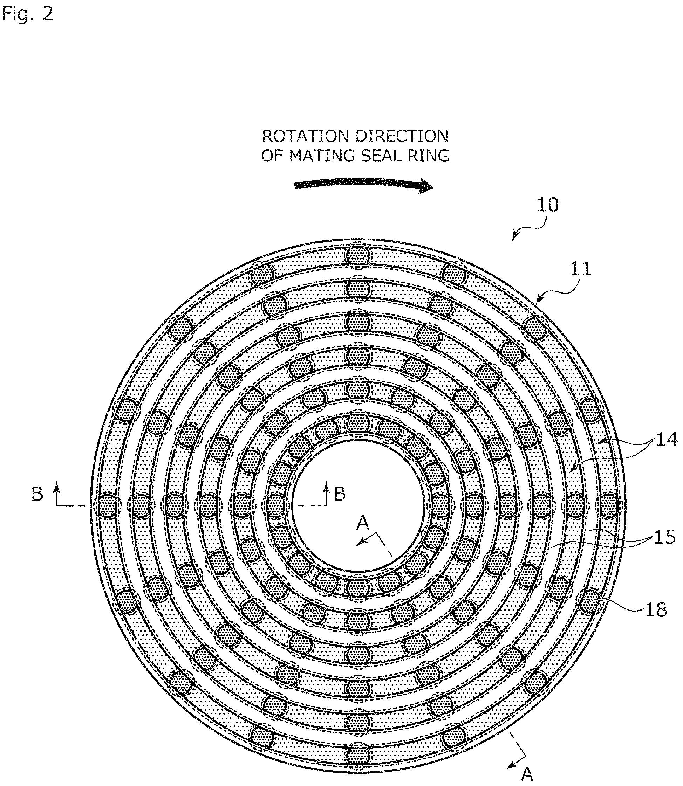

As illustrated in FIG. 2, the rotating seal ring 20 is adapted to slide relative to the stationary seal ring 10 in the direction indicated by the solid arrow.

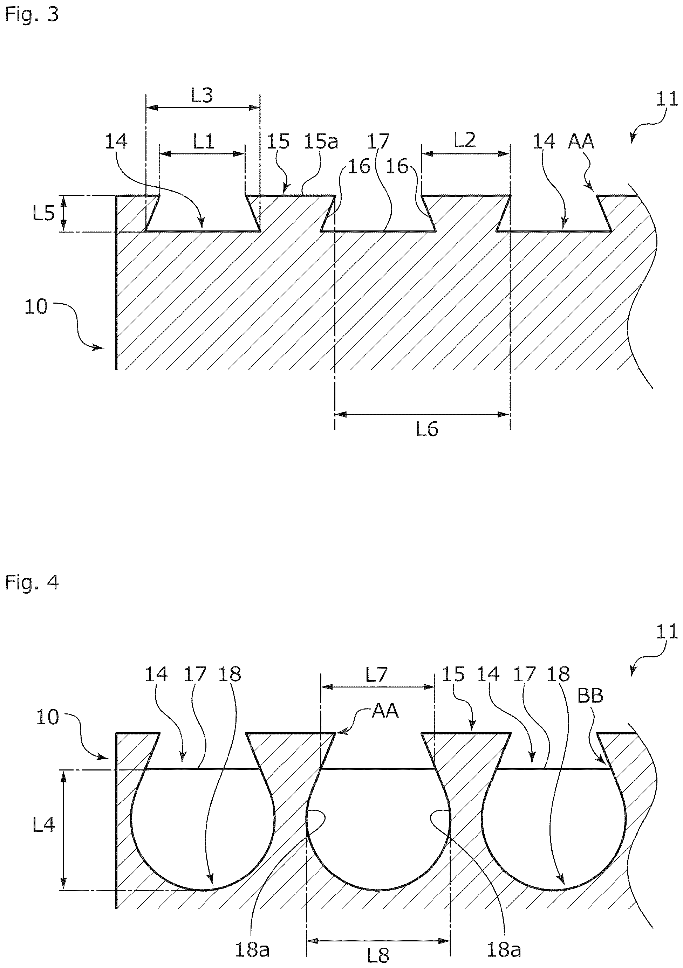

A plurality of endless annular circumferential grooves 14 are formed in the radial direction on the sliding surface 11 of the stationary seal ring 10, and each groove is provided concentrically with the sliding surface 11. That is, each of the circumferential grooves 14 is provided independently in the radial direction, and the circumferential grooves 14 are not in communication with each other. The circumferential grooves 14 are arranged in the radial direction at a predetermined pitch width dimension L6 (see FIG. 3), and an endless annular convex protrusion 15 is formed as a land between adjacent circumferential grooves 14 in the radial direction. The protrusions 15 and the circumferential grooves 14 are alternately formed in the radial direction to form a periodic structure of the texture formed on the sliding surface 11. The pitch width dimension L6 is the distance between the same positions in the width direction of adjacent circumferential grooves 14, for example, the distance between the inner radial side end of one circumferential groove 14 and the inner radial side end of the circumferential groove 14 adjacent to that circumferential groove 14.

As illustrated in FIG. 3, these circumferential grooves 14 all have the same cross-sectional shape, and the opening width of the opening is a width dimension L1. Further, the circumferential groove 14 has a constant depth dimension L5 in both circumferential and radial directions. Furthermore, for convenience of description, the depth of the circumferential groove 14 and the depth of a dimple 18 described later are illustrated roughly and deeper than in reality. Specifically, the opening width of the circumferential groove is 20 µm or less, and the depth dimension is 400 nm or less. Further, the depth of the circumferential groove 14 may not be constant in the circumferential direction and the radial direction.

The radial width dimension L2 of the protrusion 15 is slightly smaller than the radial width dimension L1 of the circumferential groove 14 (L1>L2). Furthermore, in this embodiment, although a form has been described in which the width dimension L2 of the protrusion 15 is smaller than the width dimension L1 of the circumferential groove 14, the width dimension of the protrusion 15 between the circumferential grooves 14 may be larger than the width dimension of the circumferential groove 14 or the width dimension of the protrusion 15 may be the same as the width dimension of the circumferential groove 14.

The circumferential groove 14 has a so-called dovetail shape consisting of a pair of side walls 16 that are inclined in the depth direction and a bottom portion 17 that is a flat surface formed parallel to the sliding surface 11. The side walls 16 on both sides are inclined so that the side of the sliding surface 11, that is, the opening edge side protrudes inward, and due to these protruding side walls 16 on the side of the sliding surface 11, the radial width dimension L1 at the opening of the circumferential groove 14 is smaller than the radial width dimension L3 of the bottom portion 17 (L3>L1). The portions of the side walls 16 on both sides that protrude toward the sliding surface 11 form a throttled opening portion AA.

The side walls 16 constituting the circumferential groove 14 are also the side surfaces of the protrusions 15 and are inclined. The protrusion 15 has a cross-sectional shape with a substantially inverted trapezoid. Specifically, a top portion 15a of the protrusion 15 substantially constitutes the sliding surface 11. In this way, the protrusions 15 constituting the land portions between the adjacent circumferential grooves 14 has root portions that are smaller in the radial direction than the top portions 15a.

As illustrated in FIG. 2, the plurality of dimples 18 which are recesses are equally spaced apart in the longitudinal direction, that is, the circumferential direction of the circumferential groove 14 at the bottom portion 17 of the circumferential groove 14. The dimples 18 are arranged radially from the center of relative rotation of the sliding surface 11 when viewed in the axial direction. The dimple 18 has a spherical shape with a portion opening into the circumferential groove 14 cut off by a flat surface, an upward facing horseshoe shape in cross section (see FIG. 4), and a circular shape when viewed in the axial direction.

As illustrated in FIG. 4, the radial dimension L7 of the opening of the dimple 18 is the same as the width dimension L3 of the bottom surface of the circumferential groove 14 (L7=L3). Furthermore, the radial dimension L7 of the dimple 18 may be smaller than the width dimension L1 of the circumferential groove 14. Further, the dimple 18 has a maximum width L8 at its center in the axial direction, and the side of the sliding surface 11 of the side wall 18a of the dimple 18 protrudes inward, so that the radial dimension L7 of the opening on the side of the sliding surface 11 is narrower than the width dimension L8 of the center (L7<L8). The portions of the side walls 18a on both sides that protrude toward the sliding surface 11 constitute the throttled opening portions BB. The width dimension L8 is the maximum radial width of the recess in the present invention.

Further, the depth dimension L4 of the dimple 18 is larger than the depth dimension L5 of the circumferential groove 14 (L4>L5). Furthermore, the depth dimension L4 of the dimple 18 may be the same as the depth dimension L5 of the circumferential groove 14 or smaller than the depth dimension L5 of the circumferential groove 14.

The stationary seal ring 10 of this embodiment is configured by forming the circumferential groove 14 on the sliding surface 11 and then forming the dimple 18 on the bottom portion 17 of the circumferential groove 14. Furthermore, the stationary seal ring 10 may be configured by forming the dimple 18 on the sliding surface 11 and then forming the circumferential groove 14.

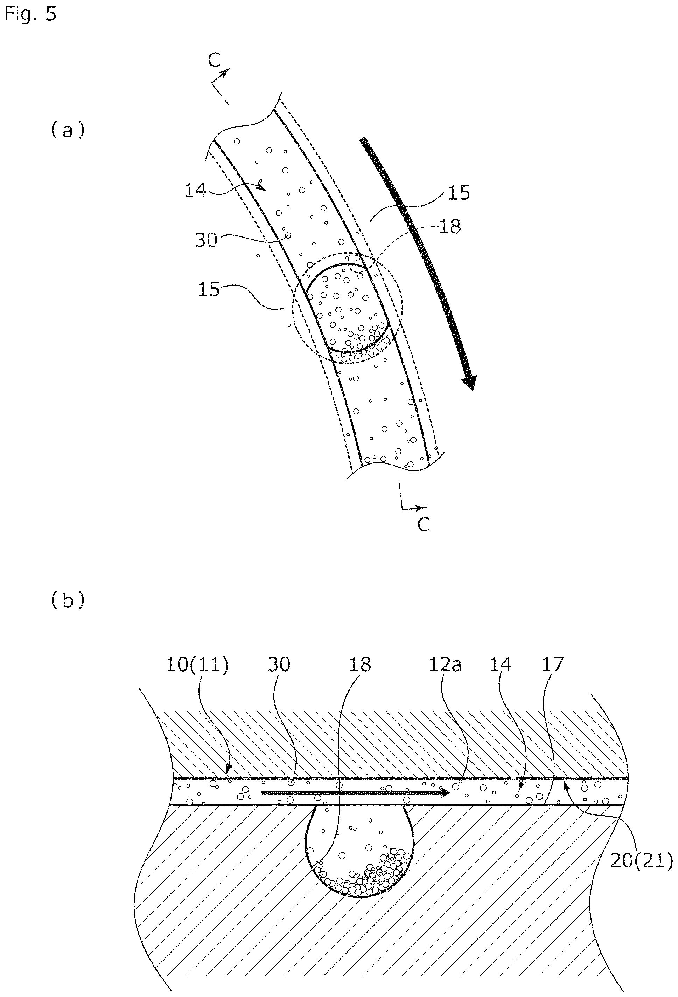

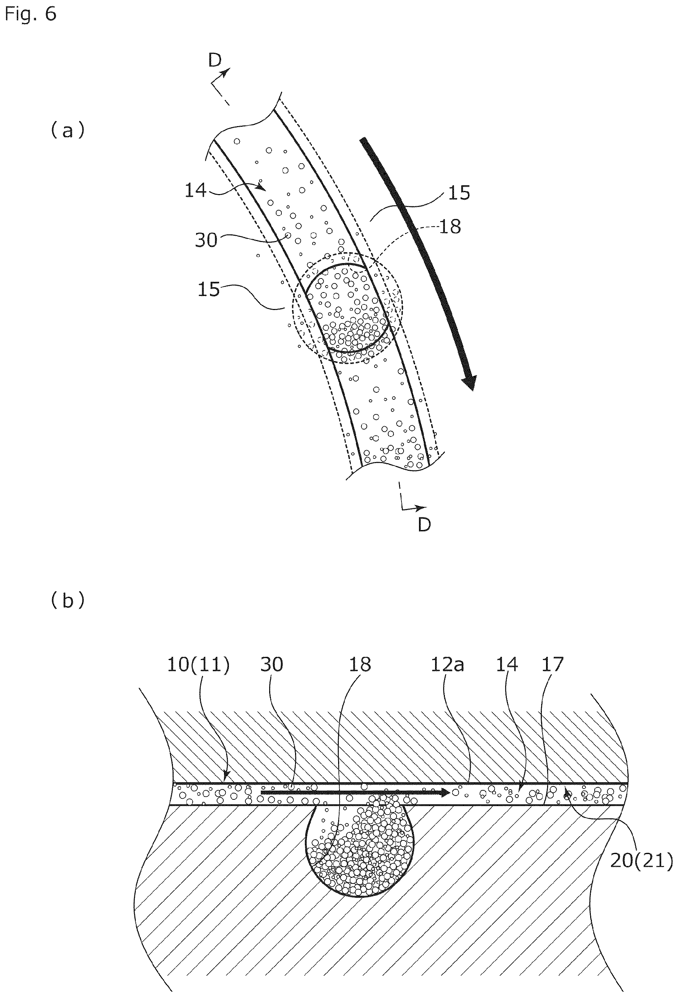

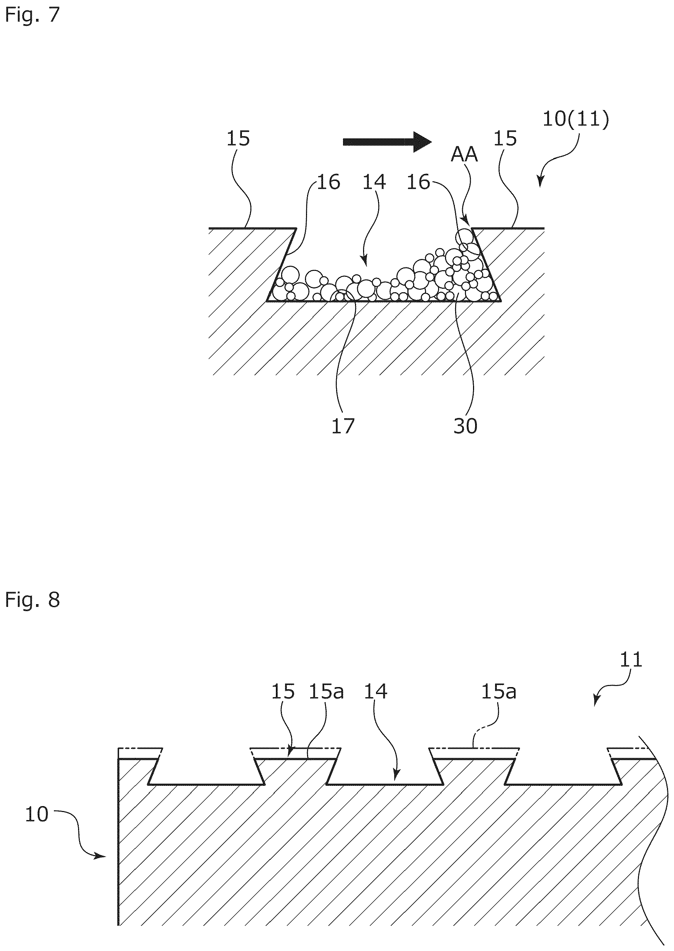

Next, the operation of the stationary seal ring 10 and the rotating seal ring 20 in a relative rotation state during a break-in operation performed before the normal operation of the mechanical seal will be described with reference to FIGS. 5 to 8. Furthermore, in FIGS. 5 and 6, the movement of the sealed fluid F and wear products 30 in one circumferential groove 14 will be described. Furthermore, in FIG. 8, the change in height of the protrusion 15 due to wear is illustrated to be larger than the actual size.

First, in a non-operation state in which the rotating seal ring 20 is not rotating, the sealed fluid F is stored in the circumferential groove 14. Furthermore, since the stationary seal ring 10 is biased toward the rotating seal ring 20 by the elastic member 7, almost no sealed fluid F leaks between the sliding surfaces 11 and 21 to the low-pressure side.

As illustrated in FIG. 5, when the rotating seal ring 20 rotates relative to the stationary seal ring 10, the sealed fluid F stored in the circumferential groove 14 moves in the rotation direction of the rotating seal ring 20 (see the arrow) due to friction with the sliding surface 21. Specifically, the sealed fluid F moves along the circumferential groove 14 that extends along the relative rotation direction with the rotating seal ring 20.

At this time, the protrusion 15 constituting the land of the stationary seal ring 10 and the flat surface of the sliding surface 21 of the rotating seal ring 20 come into localized contact with each other to generate fine wear products 30. The wear products 30 may be from the stationary seal ring 10, the rotating seal ring 20, or a mixture thereof.

The fine wear products 30 move along the circumferential groove 14 together with the sealed fluid F. Then, a part of the wear products 30 moving along the circumferential groove 14 is captured within the dimple 18. Specifically, the relative rotation downstream side surface constituting the dimple 18 is located at a position lower than the bottom portion 17 of the circumferential groove 14, so that the surface captures the wear products 30.

As illustrated in FIG. 6, when the rotating seal ring 20 further rotates relative to the stationary seal ring 10 from the state illustrated in FIG. 5, the wear products 30 are further captured in the dimple 18, and the wear products 30 are accumulated in the dimple 18 and the layers on the bottom portion 17 of the circumferential groove 14. That is, a large amount of wear products 30 is present around the bottom portion 17 of the circumferential groove 14 and around each dimple 18. The break-in operation is completed when a predetermined time has elapsed or the friction coefficient becomes equal to or smaller than a predetermined value.

Since the wear products 30 flowing along the circumferential groove 14 are captured and accumulated by the dimple 18 provided on the circumferential groove 14, the fine wear products 30 serving as a lubricant can be effectively retained within the circumferential groove 14. Further, the layer of the wear products 30 accumulated in the circumferential groove 14 can retain a large amount of the sealed fluid F in that a wide surface area of the wear products 30 is ensured due to many air gaps between the wear products 30 and the wear products 30 are mainly composed of SiC. As a result, a high level of lubricity between the sliding surfaces 11 and 21 can be maintained.

As illustrated in FIG. 7, since the circumferential groove 14 has the throttled opening portion AA on the side of the sliding surface 11, the volume for holding the wear products 30 taken into the circumferential groove 14 is secured widely on the bottom surface side while the opening on the side of the sliding surface 11 is narrowed in the width direction by the throttled opening portion AA during the break-in operation or when the break-in operation is completed. Accordingly, the discharge of the collected wear products 30 onto the sliding surface 11 is hindered.

Specifically, in this embodiment, the wear products 30 in the circumferential groove 14 are moved to the inner radial side in the radial direction, that is, to one opening edge side in the width direction across the mechanical seal with the movement of fluid due to the pressure difference from the outer radial side as the high-pressure side to the inner radial side as the low-pressure side, but the inward projecting side wall 16 constituting the throttled opening portion AA hinders the movement of the wear products 30 toward the sliding surface 11. Accordingly, it is possible to prevent the excess wear products 30 from adversely affecting the low friction properties of the sliding surfaces 11 and 21 and to maintain the effect of the low friction properties of the sliding surfaces 11 and 21 when the break-in operation is completed.

Further, since the throttled opening portion AA of the circumferential groove 14 is formed by both side walls 16 of the circumferential groove 14 protruding in the radial direction, the wear products 30 collected in the circumferential groove 14 are unlikely to be discharged from either side in the radial direction.

Further, since the circumferential groove 14 has a dovetail shape with both side walls 16 that are inclined and the inclination forms the throttled opening portion AA, a large volume can be formed on the side of the bottom portion 17 of the circumferential groove 14, and the wear products 30 can be efficiently collected. Furthermore, since both side walls 16 are inclined, the wear products 30 are efficiently guided to the dimple 18 formed on the bottom portion 17.

Further, since the width dimension L3 of the bottom surface of the circumferential groove 14 is substantially the same as the radial dimension L7 of the opening of the dimple 18, the wear products 30 flowing along the circumferential groove 14 can be effectively retained within the circumferential groove 14 and within the communicating dimples 18.

Further, since the dimple 18 is formed to be deeper than the circumferential groove 14, the wear products 30 accumulated in the dimple 18 are unlikely to be discharged to the outside of the dimple 18 due to the relative rotation of the sliding surfaces 11 and 21.

Further, since the dimples 18 are arranged evenly in the longitudinal direction of the circumferential groove 14, the wear products 30 can be accumulated in a balanced manner by dispersing them in the longitudinal direction of the circumferential groove 14. Further, since the circumferential grooves 14 are spaced apart in the radial direction, the wear sections that produce the wear products 30 can be secured on the sliding surfaces 11 and 21.

Further, the dimple 18 has a throttled opening portion BB on the side of the sliding surface 11. Accordingly, the throttled opening portion BB of the dimple 18 and the throttled opening portion AA of the circumferential groove 14 cooperate to effectively suppress the discharge of the wear products 30 toward the sliding surface 11.

Further, since the sealed fluid F is retained in the fine gaps between the wear products 30, the lubrication between the sliding surfaces 11 and 21 is improved.

Further, the circumferential grooves 14 are independently provided at a plurality of positions in the radial direction. In other words, since the circumferential groove 14 is not in communication with the side of the sealed fluid F or the atmosphere A, which is the external space, the wear products 30 can be prevented from being discharged from the circumferential groove 14 toward the sealed fluid F or the atmosphere A. Therefore, the fine wear products 30 can be effectively retained within the circumferential groove 14.

Further, since the dimple 18 has a circular shape when viewed in the axial direction, no corners are formed and the wear products 30 are easily captured in the dimple 18 in a balanced manner.

Further, the stationary seal ring 10 is formed of SiC, and the wear product 30 of SiC is highly hydrophilic. In addition, since the fine wear products 30 have a large surface area, the fine wear products can favorably retain water around the circumferential grooves 14 and dimples 18 and improve lubrication.

Further, in the first embodiment above, a form has been described in which the dimples 18 are arranged to be scattered radially from the relative rotation center of the sliding surface 11 when viewed in the axial direction, but the present invention is not limited thereto. For example, the dimples 18 may be formed randomly so as to be unevenly spaced in the longitudinal direction of the circumferential groove 14.

Further, when the mechanical seal is operated normally for a long period of time, the wear of the protrusion 15 progresses as illustrated in FIG. 8. A portion between the circumferential grooves 14 formed on the sliding surface 11 and extending in the circumferential direction is the protrusion 15 having an inclination from the top portion 15a to a base portion, and as illustrated in FIG. 8, even when the top portion 15a is worn away by wear caused by the break-in progression of the sliding surface 11, the surface area of this top portion 15a, that is, the actual sliding area of the sliding surface 11 of the stationary seal ring 10, becomes slightly smaller, so that the maintenance of low friction properties is not hindered.

Further, as illustrated in FIGS. 3 and 4, the radial dimension L7 (see FIG. 4) of the opening of the dimple 18 may be formed to be larger than half the pitch width dimension L6 (see FIG. 3) of the circumferential groove 14 (L7>L6/2).

### {Second embodiment}

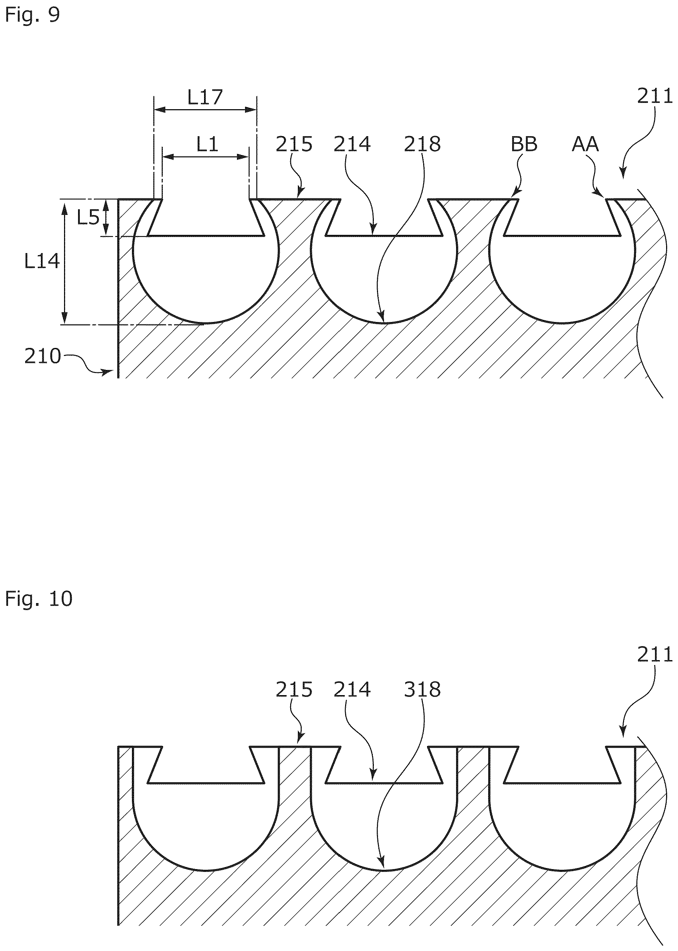

Next, sliding components according to a second embodiment of the present invention will be described with reference to FIG. 9. Furthermore, the description of the same configuration as in the first embodiment above will be omitted.

As illustrated in FIG. 9, dimples 218 as recesses are scattered in a sliding surface 211 of a stationary seal ring 210 of the second embodiment. The dimples 218 are formed between adjacent protrusions 215 on the sliding surface 211, and circumferential grooves 214 and the dimples 218 partially overlap each other and serve as a part of a mutual configuration. The depth dimension L14 of the dimple 218 is formed to be deeper than the depth dimension L5 of the circumferential groove 214, and the diameter of its opening, that is, the opening width dimension L17, is formed to be larger than the opening width dimension L1 of the circumferential groove (L17>L1).

Accordingly, the dimple 218 having a larger opening width dimension L17 than the opening width dimension L1 of the circumferential groove 214 can receive the fine wear products 30 via the communicating circumferential grooves 214 and can also directly collect the fine wear products 30 from the sliding surface 211.

Furthermore, the dimple is formed in a spherical shape with a part opening on the sliding surface 211 cut off by a flat surface, but is not limited to a shape having an upward horseshoe shape in cross section, a circular shape when viewed in the axial direction, and having a throttled opening portion on the side of the sliding surface 211. For example, as in a dimple 318 of Modified Example 2-1 illustrated in FIG. 10, the shape may be a U-shape in cross section and have an opening cross-sectional area on the side of the sliding surface 211 which is substantially the same as the center portion in the depth direction.

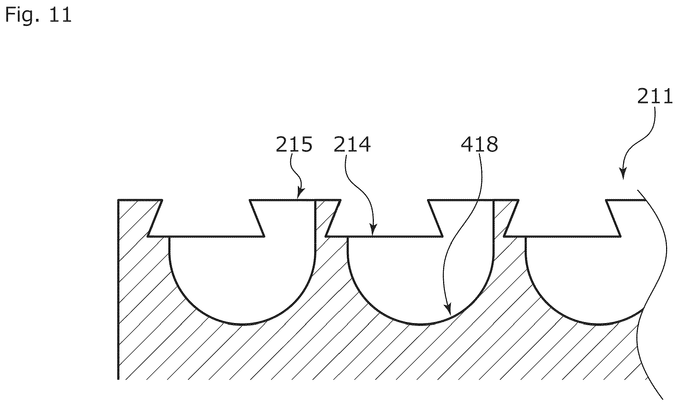

Further, the dimple is not limited to a configuration in which the dimple is formed in an overlapping manner at a radially symmetrical position relative to the circumferential groove 214, and for example, as in a dimple 418 of Modified Example 2-2 illustrated in FIG. 11, the dimples may be located radially inward from the circumferential groove 214.

### {Third embodiment}

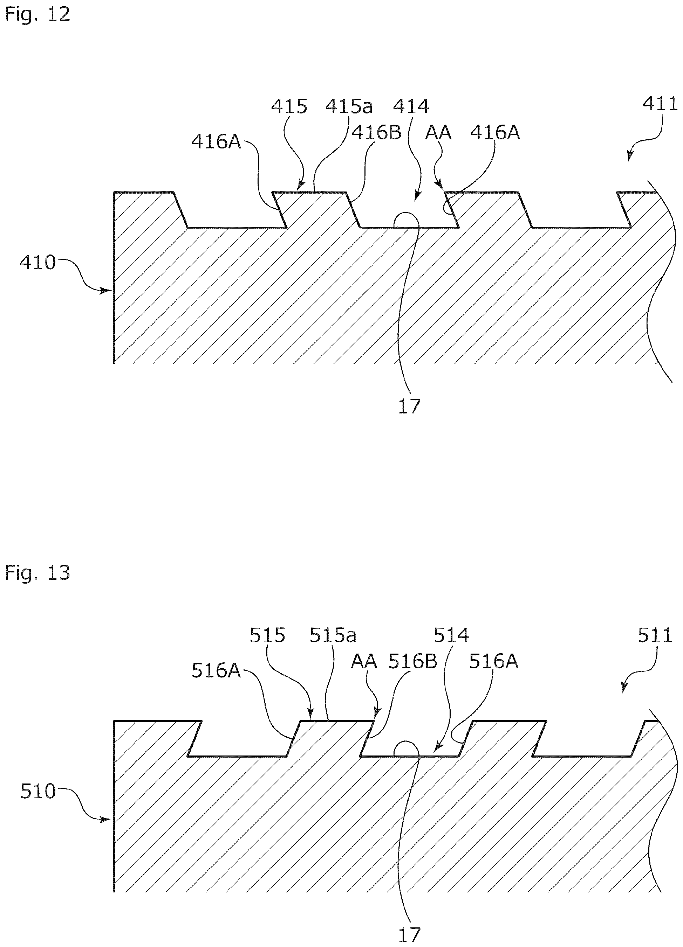

Next, sliding components according to a third embodiment of the present invention will be described with reference to FIGS. 12 and 13. Furthermore, the description of the same configuration as in the first embodiment above will be omitted.

As illustrated in FIG. 12, a circumferential groove 414 of a stationary seal ring 410 of the third embodiment has a side wall 416A which is inclined from an edge on the inner radial side of the bottom portion 17 to the outer radial side and extends toward a sliding surface 411 and a side wall 416B which is inclined from an edge on the outer radial side of the bottom portion 17 to the outer radial side and extends toward the sliding surface 411.

As described above, in the inside type mechanical seal, the wear products 30 within the circumferential groove 414 moves radially inward as the fluid moves due to the pressure difference. Since the throttled opening portion AA of the circumferential groove 414 projects radially outward, the inner radial side wall 416A can prevent the wear products 30 from moving toward the sliding surface 411.

Accordingly, the stationary seal ring 410 prevents the excess wear products 30 from adversely affecting the low friction properties of the sliding surfaces 411 and 21 and can maintain the effect of the low friction properties of the sliding surfaces 411 and 21 when the break-in operation is completed.

Further, the side wall 416A and the side wall 416B are inclined substantially in the same direction from the bottom portion 17. Accordingly, the circumferential groove 414 can be formed by cutting while keeping the angle between the stationary seal ring 410 and a cutting device such as a laser substantially constant. Therefore, it is easy to reduce manufacturing costs by reducing the number of working steps. Furthermore, an example has been described in which the side wall 416A and the side wall 416B are parallel to each other, but the side wall 416A and the side wall 416B may not be parallel to each other when the side walls are inclined substantially in the same direction from the bottom portion 17.

A protrusion 415 has a top portion 415a, the side wall 416A, and the side wall 416B. That is, the protrusion 415 is inclined radially outward from the base portion and extends toward the rotating seal ring 20.

Further, the side wall 416A and the side wall 416B are substantially parallel to each other. The protrusion 415 has a substantially uniform radial cross-sectional area at any axial position.

Accordingly, even when the top portion 415a of the protrusion 415 is worn away due to wear caused by the break-in progression of the sliding surface 411, the surface area of the top portion 415a, that is, the sliding area of the substantial sliding surface 411 of the stationary seal ring 410 is easily kept substantially constant. As a result, the effect of the low friction properties of the sliding surfaces 411 and 21 can be made to be the same for the plurality of stationary seal rings 410 after the break-in operation is completed.

Furthermore, in this embodiment, the side surface of the protrusion located at the radial end is a part of the outer peripheral surface or the inner peripheral surface extending along the axial direction of the stationary seal ring, but the present invention is not limited thereto. For example, the protrusion located at the radial end may be inclined from a surface extending along the axial direction of the stationary seal ring to be substantially parallel to the side wall 416A or the side wall 416B.

Further, the stationary seal ring 410 may be applied to an outside type mechanical seal that seals the sealed fluid F trying to leak from the inner radial side toward the outer radial side of the sliding surface.

In the case of the outside type mechanical seal, as in a stationary seal ring 510 of Modified Example 3-1 illustrated in FIG. 13, it is preferable that the throttled opening portion AA of a circumferential groove 514 in an outer radial side wall 516B projects toward the circumferential center of the circumferential groove 514 in that the movement of the wear products 30 toward the sliding surface 511 is hindered.

Further, since an inner radial side wall 516A is inclined substantially in the same direction as the outer radial side wall 516B, the stationary seal ring 510 can reduce the number of working steps for forming the circumferential groove 514 and reduce manufacturing costs as in the above-described stationary seal ring 410.

Further, since the side wall 516A and the side wall 516B are substantially parallel to each other, even when a top portion 515a of the protrusion 515 is worn away due to wear caused by the break-in progression of the sliding surface 511, the surface area of the top portion 515a is likely to be kept substantially constant.

Accordingly, as in the above-described stationary seal ring 410, the stationary seal ring 510 is designed so that the sliding area of the substantial sliding surface 511 of the stationary seal ring 510 is easily kept substantially constant. As a result, after the break-in operation is completed, the effect of the low friction properties of the sliding surfaces 511 and 21 can be made to be the same for each stationary seal ring 510.

Furthermore, the stationary seal ring 510 may be used as the inside type mechanical seal.

Although the embodiments of the present invention have been described above with reference to the drawings, the specific configuration is not limited to these embodiments, and the present invention also includes modifications and additions that do not deviate from the scope of the present invention.

For example, in the first to third embodiments above, the throttled opening portion of the circumferential groove is formed by the portion on the side of the sliding surface of the inclined side wall, but the present invention is not limited thereto. For example, the side wall of the circumferential groove may be formed to be perpendicular to the sliding surface, and the throttled opening portion may be formed by a protrusion protruding inward and toward the sliding surface in the longitudinal direction of the side wall. The protrusion may have any shape, and may be located slightly closer to the bottom portion than the edge of the opening.

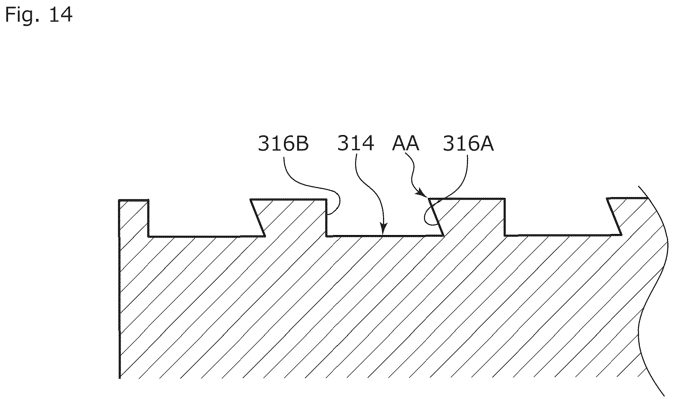

Further, in the first to second embodiments above, both side walls of the circumferential groove are inclined so that the throttled opening portion is narrowed on both sides of the circumferential groove in the width direction, but the present invention is not limited thereto. For example, as in a circumferential groove 314 of Modified Example 4 illustrated in FIG. 14, only one side wall 316A may be inclined and the other side wall 316B may be perpendicular to the sliding surface, so that the opening of the circumferential groove 314 is narrowed only on one side in the width direction. In this case, the throttled opening portion AA is preferably formed on the outer radial side or the inner radial side, which is the low-pressure side of the mechanical seal, in order to effectively hinder the movement of the wear products 30 that accompanies the movement of fluid due to a pressure difference. Further, when there is no pressure difference between the fluid present on the outer radial side and the inner radial side of the stationary seal ring, the formation of the throttled opening portion on the outer radial side of the stationary seal ring can effectively hinder the movement of the wear products 30 that accompanies the movement of the fluid toward the outer radial side due to the centrifugal force when the rotating seal ring rotates.

Further, the recesses formed on the sliding surface are not limited to a circular shape when viewed in the axial direction like dimples, but may have a rectangular shape that is elongated in the radial or circumferential direction when viewed in the axial direction, or may have a square shape in the axial direction. That is, the shape is not limited.

Further, the dimples forming the periodic structure are not limited to being arranged so as to overlap in the radial direction, but may be formed in a zigzag shape when viewed in the axial direction, and may not be arranged concentrically with the sliding surface.

Further, in the first to third embodiments above, a form has been described in which the circumferential groove is a groove that has an endless annular shape, for example, a groove that extends in the circumferential direction, a groove that extends in the radial direction, or a groove that has a component extending in the radial direction and a component extending in the circumferential direction.

Further, in the first to third embodiments above, a form has been described in which the circumferential groove has a constant depth in the circumferential direction, for example, a taper shape in which a part of the bottom portion in the circumferential groove becomes shallow or deep toward one side in the relative rotation direction.

Further, in the first to third embodiments above, although the sliding component has been described by taking an example of the mechanical seal for an automobile, other mechanical seals for general industrial machines, water pumps, and the like may also be used. Furthermore, the present invention is not limited to mechanical seals, and may be applied to sliding components other than mechanical seals, such as sliding bearings.

Further, in the first to third embodiments above, although an example has been described in which the circumferential grooves and the dimples as the recesses are provided only on the stationary seal ring, the circumferential grooves and the recesses may be provided only on the rotating seal ring or both the stationary seal ring and the rotating seal ring.

Further, in the first to third embodiments above, although it has been described such that the sealed fluid side is the high-pressure side and the leakage side is the low-pressure side, the sealed fluid side may be the low-pressure side and the leakage side may be the high-pressure side or the sealed fluid side and the leakage side may have substantially the same pressure.

Further, in the first to third embodiments above, a form has been described in which the inside type seals the sealed fluid F trying to leak from the outer radial side toward the inner radial side of the sliding surface, but the present invention is not limited thereto. For example, an outside type that seals the sealed fluid F trying to leak from the inner radial side toward the outer radial side of the sliding surface may be used.

Further, the sealed fluid F may be liquid or a mist of a mixture of liquid and gas, and may be, for example, lubricating oil.

### {REFERENCE SIGNS LIST}

- 10:: Stationary seal ring (sliding ring)
- 11:: Sliding surface
- 14:: Circumferential groove
- 15:: Protrusion (land portion)
- 15a:: Top portion
- 16:: Side wall (throttled opening portion)
- 17:: Bottom portion
- 18:: Dimple (recess)
- 20:: Rotating seal ring (sliding ring)
- 21:: Sliding surface
- 30:: Wear products
- A:: Atmosphere
- AA:: Throttled opening portion
- BB:: Throttled opening portion
- F:: Sealed fluid

## Claims

1. Sliding components comprising a pair of sliding rings having sliding surfaces which rotate relative to each other to define an outer radial space and an inner radial space of the sliding rings,
wherein the sliding surface of one of the sliding rings is provided with a circumferential groove extending in a circumferential direction and a recess communicating with the circumferential groove, and
wherein the circumferential groove has a throttled opening portion in close vicinity to the sliding surface of the one of the sliding rings.

2. The sliding components according to claim 1,
wherein the throttled opening portion is defined by both side walls of the circumferential groove projecting in a radial direction.

3. The sliding components according to claim 1,
wherein the circumferential groove has a dovetail shape in which both side walls of the circumferential groove are inclined with respect to an axial direction.

4. The sliding components according to claim 1,
wherein the recess is formed to be deeper than the circumferential groove.

5. The sliding components according to claim 1,
wherein the recess has a throttled opening portion on the side of the sliding surface.

6. The sliding components according to claim 1,
wherein the recess is formed at a plurality of positions along the circumferential groove extending in a circumferential direction.

7. The sliding components according to claim 1,
wherein the circumferential groove is formed in a plurality of radial stripes at a predetermined pitch, and
wherein a maximum radial width of the recess is equal to or larger than half the predetermined pitch of the circumferential grooves.

8. The sliding components according to any one of claims 1 to 7,
wherein the sliding components are formed of SiC.
